# FASCICULE DE BREVET EUROPEEN

(11) **EP 3 832 400 B1**
(45) Date de publication et mention de la délivrance du brevet: **22.06.2022**
(21) Numéro de dépôt: 19213433.6
(22) Date de dépôt: 04.12.2019
(51) Int. Cl.: G04D 7/00, G04D 7/04

(54) **DISPOSITIF ET PROCEDE DE MESURE D'EBATS D'HORLOGERIE**
VORRICHTUNG UND VERFAHREN ZUR MESSUNG DES SPIELS EINES UHRENELEMENTS
DEVICE AND METHOD FOR MEASURING THE PLAY OF A TIMEPIECE ELEMENT

(43) Date de publication de la demande: 09.06.2021
(73) Titulaire: ETA SA Manufacture Horlogère Suisse, 2540 Grenchen (CH)
(72) Inventeur: RICHARD, Murielle, 1950 Sion (CH); GANGUIN, Fabrice, 2740 Moutier (CH)
(74) Mandataire: ICB SA

(56) Documents cités:
- CH-A- 416 136
- JP-A- S59 142 401

## Description

### Domaine de l'invention

L'invention concerne un dispositif de mesure d'ébats d'horlogerie, comportant une structure porteuse d'un mécanisme articulé comportant une pince agencée pour serrer un mobile d'horlogerie au sein d'un ensemble horloger ou d'un mouvement d'horlogerie assemblé.

L'invention concerne un procédé de mesure d'ébats d'horlogerie, mettant en œuvre ce dispositif.

L'invention concerne le domaine de la métrologie horlogère, au stade de l'assemblage final des mécanismes, et plus particulièrement de la mesure des ébats de certains mobiles assemblés dans un ensemble ou dans un mouvement d'horlogerie.

### Arrière-plan de l'invention

La mesure de l'ébat d'un mobile d'horlogerie au sein d'un mécanisme assemblé, comme un mouvement d'horlogerie, est une opération difficile et souvent peu précise. Cette mesure est très délicate à effectuer, en raison de la faible accessibilité aux composants d'un mécanisme horloger, et elle est tributaire des conditions de mesure, et en particulier de la position dans le champ de gravité. La mesure nécessite un déplacement des composants, et peut, encore, être faussée par les frottements, les défauts micrométriques de forme et d'état de surface, et par la nature de la lubrification.

On connaît un principe consistant à retourner un mécanisme complet dans le champ de gravité, et à mesurer les positions et les courses dans deux configurations opposées dessus/dessous, mais il se révèle difficile à mettre en œuvre.

Les mécanismes existants nécessitent un accès de part et d'autre du mécanisme pour la mesure d'un ébat, ce qui n'est pas toujours possible avec certains mécanismes, notamment avec des montres intégrées, ou à composants soudés, ou similaires.

De plus, aujourd'hui sur les appareils existants, la force de poussée exercée pour effectuer la mesure est donnée en fonction de l'expérience, et cela ne garantit pas qu'il n'y ait aucune déformation parasitant la mesure de l'ébat, par exemple la déformation d'un pont, ou similaire.

Le document JP S59 142401 A divulgue un dispositif de mesure d'ébats d'horlogerie comprenant un capteur, un micro-ordinateur et un moteur à impulsion.

### Résumé de l'invention

L'invention se propose de mettre en œuvre un dispositif et un procédé de mesure ne nécessitant un accès que sur un seul côté du mécanisme d'horlogerie.

Le principe d'une mesure d'ébats basée sur des éléments compliants permet de remplir cette condition.

Le système compliant présente l'avantage de présenter une caractéristique linéaire effort/déplacement, ce qui permet de connaître simultanément la force et le déplacement du mobile. Il est ainsi possible de garantir que l'on mesure uniquement l'ébat, et non la déformation d'un pont ou autre partie du mouvement ou de la tête de montre.

Le déroulement de la mesure selon l'invention est également innovant : le système pousse le mobile, selon une direction de mesure, dans un premier sens, par exemple vers le bas, jusqu'à détecter la déformation du mouvement, établit son zéro, et fait de même dans le sens inverse lors d'un mouvement ascendant jusqu'à déformation pour déterminer l'ébat.

De plus, le système compliant étant sans jeu et sans frottement, on garantit ainsi que le guidage ne produit pas d'effets susceptibles de perturber / fausser la mesure.

Ainsi l'invention concerne un dispositif de mesure d'ébats d'horlogerie selon la revendication 1.

L'invention concerne encore un procédé de mesure d'ébat, mettant en œuvre ce dispositif.

### Description sommaire des dessins

D'autres caractéristiques et avantages de l'invention apparaîtront à la lecture de la description détaillée qui va suivre, en référence aux dessins annexés, où :

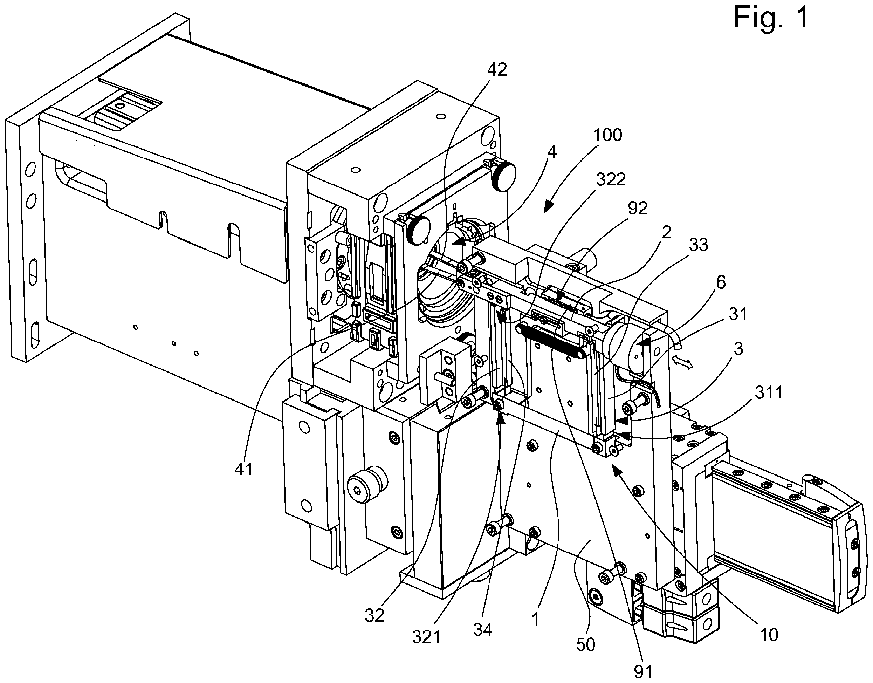

- la figure 1 représente, de façon schématisée, et en perspective, un dispositif de mesure d'ébats selon l'invention, qui est une machine comportant une structure apte à positionner un mouvement d'horlogerie ou un ensemble d'horlogerie, et à procurer l'accès, selon une direction de mesure, à un préhenseur, ici une pince; ce préhenseur est monté à l'extrémité d'une poutre animée d'un mouvement sensiblement linéaire par un actionneur, cette poutre est suspendue par un mécanisme compliant par rapport à un autre élément fixé à la structure, ce mécanisme compliant comportant ici des traverses à cols formant un parallélogramme déformable avec la poutre et l'élément fixe ; la poutre mobile est munie d'un moyen de contrôle sans contact de sa position linéaire, ici un contrôle optique ;

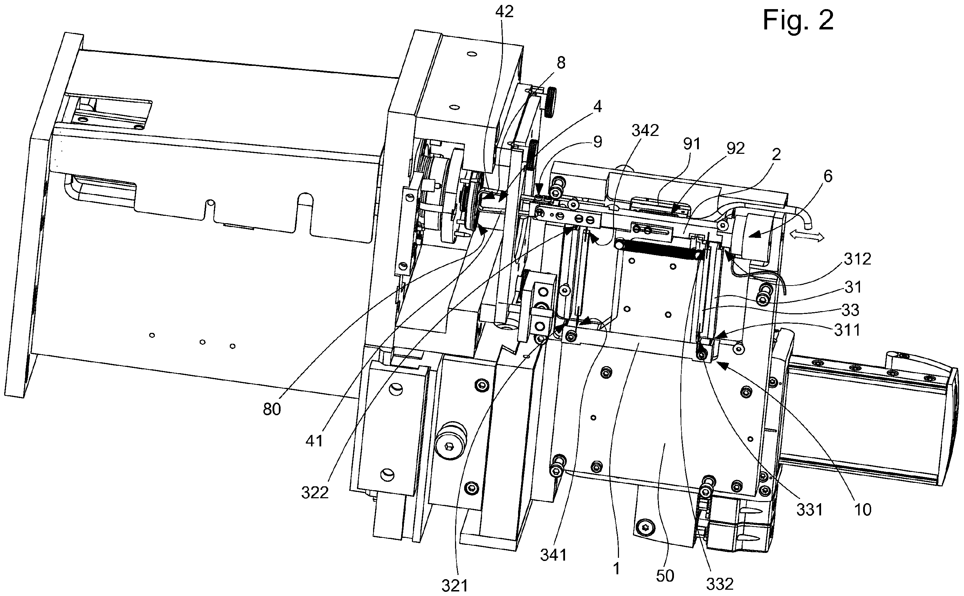

- la figure 2 représente, de façon similaire à la figure 1,le même mécanisme sous un autre angle, laissant voir le préhenseur en position de saisie du mobile ;
- les figures 3 à 5 représentent, de façon schématisée, un préhenseur constitué par une pince avec des bras élastiques, dans un état libre non contraint en figure 3, en position d'ouverture sous l'action d'un excentrique en figure 4, et en position refermée, en saisie d'un mobile, en figure 5 ;
- la figure 6 représente, de façon schématisée, une partie du mécanisme de la figure 1, montrant uniquement le mécanisme articulé comportant le mécanisme compliant, l'actionneur de manœuvre, le préhenseur en position ouverte, et le mobile à contrôler ;
- la figure 7 est un schéma-blocs montrant les modules fonctionnels d'acquisition des données ;
- la figure 8 est un diagramme force/course montrant les deux positions de rupture de pente d'effort, qui définissent l'ébat, entre lesquelles la caractéristique de force est la caractéristique linéaire du mécanisme compliant, et au-delà desquelles la valeur absolue de l'effort est supérieure à celle de l'effort du seul mécanisme compliant et où la pente de l'effort est variable et supérieure à la pente de la caractéristique du mécanisme compliant.

### Description détaillée des modes de réalisation préférés

L'invention concerne un dispositif de mesure d'ébats d'horlogerie 100. Ce dispositif 100 comporte une structure 50, qui est porteuse d'un mécanisme articulé 3 comportant un préhenseur 4 agencée pour serrer un mobile 8 d'horlogerie au sein d'un ensemble horloger ou d'un mouvement d'horlogerie assemblé. Le terme de préhenseur s'entend au sens large : les figures représentent un préhenseur 4 mécanique qui est une pince, avec des bras 41 et 42 capables de serrer une portée d'un mobile 8, mais ce préhenseur peut être d'un autre type, par exemple à dépression, magnétique, ou autre, sans s'éloigner de l'invention.

Selon l'invention, ce mécanisme articulé 3 comporte un premier élément 1 fixé à la structure 50, et par rapport auquel est mobile un deuxième élément 2 dans un mouvement sensiblement linéaire sous l'action d'au moins un actionneur 6. Cet actionneur 6 est agencé pour manœuvrer sans contact et dans les deux sens le deuxième élément 2 sensiblement parallèlement à une direction de mesure D. Par exemple l'actionneur 6 peut comporter une bobine générant le mouvement d'un noyau, ou un vérin, ou similaire ; on appelle ici « moteur » l'élément générant un effort, qu'il soit mécanique, électrique, hydraulique, pneumatique, ou autre.

Le mécanisme articulé 3 comporte un mécanisme compliant 10 à cols et/ou à lames flexibles, à caractéristique force/course sensiblement linéaire, reliant le deuxième élément 2 au premier élément 1.

Le dispositif 100 comporte au moins un capteur de position 9, qui est agencé pour déterminer la position du deuxième élément 2 selon la direction de mesure D.

Le dispositif 100 comporte encore au moins un capteur d'effort 7, qui est agencé pour déterminer la variation de l'effort axial de poussée ou de traction du deuxième élément 2 porteur du préhenseur 4, et/ou la variation du gradient de cet effort. Ce capteur d'effort 7 est agencé pour adresser à un système de pilotage 200, que comporte le dispositif 100, un signal de déclenchement de mesure de position lors de chaque rupture de pente d'effort dans chaque sens de marche, et pour déterminer la valeur de l'ébat E du mobile 8 au sein de l'ensemble dans lequel il est monté, par comparaison des valeurs de position mesurées lors des deux positions de rupture de pente lors de la course aller et de la course retour.

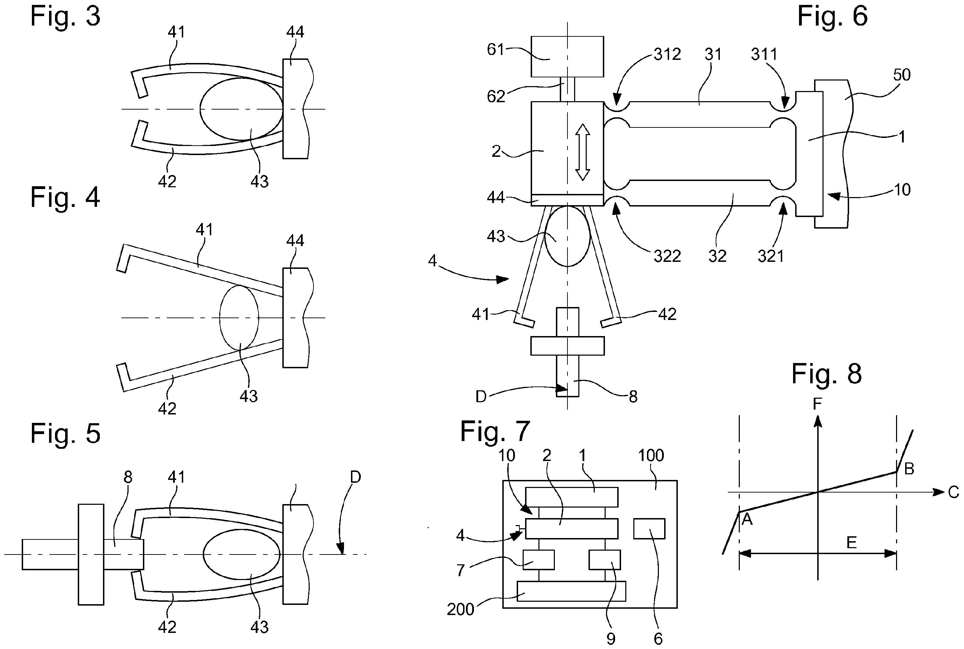

La figure 8 illustre le diagramme effort/course : entre les positions A et B une caractéristique linéaire d'une certaine pente qualifie le mécanisme compilant ; en deçà de la première position A et au-delà de la deuxième position B, l'effort mesuré, est, en valeur absolue, fortement supérieur à l'effort propre au mécanisme compliant 10, et intègre donc la déformation des structures porteuses du mobile 8 : ponts, guidages, ou autres. Le dispositif 100 a donc pour fonction de repérer ces deux positions A et B : l'ébat E est tout simplement la course linéaire entre ces deux positions.

Plus particulièrement, le mécanisme compliant 10 est du type système à quatre cols avec au moins deux traverses 31, 32, s'étendant entre le premier élément 1 et le deuxième élément 2, notamment mais non limitativement sensiblement perpendiculairement à l'un et à l'autre, auxquels les traverses 31 et 32 sont reliées chacune par deux cols 311, 312, respectivement 321, 322, les deux traverses 31, 32, constituant avec le premier élément 1 et le deuxième élément 2 un parallélogramme déformable dans l'exemple particulier et non limitatif des figures.

De façon particulière, cet au moins un capteur de position 9 est un capteur optique avec une règle de mesure 92 fixée sur le mécanisme compliant 10, au niveau du deuxième élément 2, ou fixée sur la structure 50, et une tête de lecture 91 est fixée sur la structure 50, ou respectivement sur le deuxième élément 2 du mécanisme compliant 10.

De façon particulière, cet au moins un capteur d'effort 7 est un capteur de consommation d'énergie de l'actionneur 6. En effet, la caractéristique force/déplacement du mécanisme compliant 10 est linéaire et connue, et la force peut être mesurée via le courant injecté dans le moteur. Tant qu'on est dans la zone avec un ébat, la force suit la caractéristique du mécanisme compliant 10, et, une fois arrivé en butée, le courant qu'on va devoir injecter dans le moteur de l'actionneur 6 pour atteindre la position suivante va augmenter, et on peut détecter facilement ce seuil de gradient de consommation d'énergie du moteur.

L'invention concerne encore un procédé de mesure d'ébats d'horlogerie. Selon ce procédé pour la mesure de l'ébat d'un mobile 8 assemblé dans un mécanisme dans une direction de mesure D, on met en œuvre un tel dispositif 100 et on effectue les étapes suivantes :
- on aligne le deuxième élément 2 selon la direction de mesure D ;
- on saisit le mobile 8 avec le préhenseur 4 ;
- on met en œuvre l'actionneur 6 dans un premier sens de marche jusqu'à l'enregistrement d'une première variation brusque du gradient d'effort sur l'actionneur 6 ;
- on enregistre la première position à laquelle se produit cette première variation ;
- on manœuvre l'actionneur 6 dans un deuxième sens de marche opposé au premier, jusqu'à l'enregistrement d'une deuxième variation brusque du gradient d'effort sur l'actionneur 6 ;
- on enregistre la deuxième position à laquelle se produit cette deuxième variation ;
- et on calcule la valeur de l'ébat du mobile par la distance entre la première position et la deuxième position.

Plus particulièrement, pour la saisie du mobile 8, on choisit le préhenseur 4 sous forme d'une pince, on ouvre le préhenseur 4 autour d'une portée du mobile 8, et on referme le préhenseur 4 en appui de serrage sur le mobile 8.

La mesure de l'ébat du mobile n'est pas la seule application possible ; le système peut également être utilisé pour d'autres mesures de distance ou de jeu, nécessitant un contrôle de la force, par exemple la mesure de l'ébat balancier d'un mouvement mécanique, ou encore la mesure de battement d'un roulement de masse oscillante, parmi bien d'autres applications possibles.

En somme, l'invention procure un moyen fiable, peu coûteux, de mesure d'ébats basé sur des éléments compliants, ce qui assure une excellente reproductibilité des mesures. L'invention permet la mesure de l'ébat d'un mobile avec accès uniquement sur le dessus du mouvement ou de la tête de montre.

Le système compliant est peu coûteux à la réalisation et possède une très bonne durée de vie, sans altération de ses caractéristiques.

## Revendications

1. Dispositif de mesure d'ébats d'horlogerie (100), comportant une structure (50) porteuse d'un mécanisme articulé (3) comportant un préhenseur (4) agencé pour serrer un mobile (8) d'horlogerie au sein d'un ensemble horloger ou d'un mouvement d'horlogerie assemblé, dans lequel ledit mécanisme articulé (3) comporte un premier élément (1) fixé à ladite structure (50) et par rapport auquel est mobile un deuxième élément (2) dans un mouvement sensiblement linéaire sous l'action d'au moins un actionneur (6) agencé pour manœuvrer sans contact et dans les deux sens ledit deuxième élément (2) sensiblement parallèlement à une direction de mesure (D), dans lequel ledit mécanisme articulé (3) comporte un mécanisme compliant (10) à cols et/ou à lames flexibles à caractéristique force/course sensiblement linéaire reliant ledit deuxième élément (2) audit premier élément (1), et dans lequel ledit dispositif (100) comporte au moins un capteur de position (9) agencé pour déterminer la position dudit deuxième élément (2) selon ladite direction de mesure (D), et au moins un capteur d'effort (7) agencé pour déterminer la variation de l'effort axial de poussée ou de traction dudit deuxième élément (2) porteur dudit préhenseur (4) et/ou la variation du gradient dudit effort, et pour adresser à un système de pilotage (200), que comporte ledit dispositif (100), un signal de déclenchement de mesure de position lors de chaque rupture de pente d'effort dans chaque sens de marche, et pour déterminer la valeur de l'ébat E dudit mobile (8) au sein de l'ensemble dans lequel il est monté, par comparaison des valeurs de position mesurées lors des deux positions de rupture de pente lors de la course aller et de la course retour.

2. Dispositif (100) selon la revendication 1, **caractérisé en ce que** ledit mécanisme compliant (10) est du type système à quatre cols avec au moins deux traverses (31, 32) s'étendant entre ledit premier élément (1) et ledit deuxième élément (2) perpendiculairement à l'un et à l'autre auxquels lesdites traverses sont reliées chacune par deux cols (311, 312 ; 321, 322), lesdites deux traverses (31, 32) constituant avec ledit premier élément (1) et ledit deuxième élément (2) un parallélogramme déformable.

3. Dispositif (100) selon la revendication 1 ou 2, **caractérisé en ce que** ledit au moins un capteur d'effort (7) est un capteur de consommation d'énergie dudit actionneur (6).

4. Dispositif (100) selon l'une des revendications 1 à 3, **caractérisé en ce que** ledit au moins un capteur de position (9) est un capteur optique avec une règle de mesure (92) fixée audit deuxième élément (2) ou à ladite structure (50), et une tête de lecture (91) fixée à ladite structure (50) ou respectivement audit deuxième élément (2).

5. Procédé de mesure d'ébats d'horlogerie, **caractérisé en ce que**, pour la mesure de l'ébat d'un mobile (8) assemblé dans un mécanisme dans une direction de mesure (D), on met en œuvre un dispositif (100) selon l'une des revendications précédentes, **en ce qu'**on aligne ledit deuxième élément (2) selon ladite direction de mesure (D), **en ce qu'**on saisit ledit mobile (8) avec ledit préhenseur (4), **en ce qu'**on met en œuvre ledit actionneur (6) dans un premier sens de marche jusqu'à l'enregistrement d'une première variation brusque du gradient d'effort sur ledit actionneur (6), **en ce qu'**on enregistre la première position à laquelle se produit ladite première variation, **en ce qu'**on manœuvre ledit actionneur (6) dans un deuxième sens de marche opposé au premier, jusqu'à l'enregistrement d'une deuxième variation brusque du gradient d'effort sur ledit actionneur (6), **en ce qu'**on enregistre la deuxième position à laquelle se produit ladite deuxième variation, et **en ce qu'**on calcule la valeur de l'ébat dudit mobile par la distance entre ladite première position et ladite deuxième position.

6. Procédé selon la revendication 5, **caractérisé en ce que**, pour la saisie dudit mobile (8), ou choisit ledit préhenseur (4) sous forme d'une pince, **en ce qu'**on ouvre ledit préhenseur (4) autour d'une portée dudit mobile (8), **en ce qu'**on referme ledit préhenseur (4) en appui de serrage sur ledit mobile (8).

## Patentansprüche

1. Vorrichtung zum Messen der Luft eines Uhrwerks (100), die eine Struktur (50) zum Tragen eines Gelenkmechanismus (3) beinhaltet, der einen Greifer (4) beinhaltet, der angeordnet ist, um ein Drehteil (8) eines Uhrwerks innerhalb einer zusammengesetzten Uhrmachereinheit oder Uhrwerks für die Uhrmacherei zu einzuspannen, wobei der Gelenkmechanismus (3) ein erstes Element (1) beinhaltet, das an der Struktur (50) befestigt ist, und ein zweites Element (2) in Bezug dazu in einer im Wesentlichen linearen Bewegung unter der Wirkung mindestens eines Wirkgliedes (6) beweglich ist, das angeordnet ist, um das zweite Element (2) berührungslos und in beide Richtungen im Wesentlichen parallel zu einer Messrichtung (D) zu betätigen, wobei der Gelenkmechanismus (3) einen elastischen Mechanismus (10) mit flexiblen Hälsen und/oder Klingen mit einer im Wesentlichen linearen Kraft-/Weg-Eigenschaft beinhaltet, die das zweite Element (2) mit dem ersten Element (1) verbinden, und wobei
die Vorrichtung (100) mindestens einen Positionsmesswertaufnehmer (9) beinhaltet, der angeordnet ist, um die Position des zweiten Elements (2) entlang der Messrichtung (D) zu bestimmen, und mindestens einen Kraftmesswertaufnehmer (7), der angeordnet ist, um die Variation der axialen Schub- oder Zugkraft des zweiten Elements (2) zum Tragen des Greifers (4) und/oder die Variation des Gradienten der Kraft zu bestimmen, und um einem Steuerungssystem (200), das die Vorrichtung (100) beinhaltet, ein Auslösesignal für die Positionsmessung bei jeder Unterbrechung eines Kraftgefälles in jeder Laufrichtung zu schicken, und um den Wert der Luft E des Drehteils (8) innerhalb der Einheit, in der es montiert ist, durch Vergleichen der gemessenen Positionswerte in zwei Positionen einer Gefälleunterbrechung auf dem Weg hin und dem Weg zurück zu bestimmen.

2. Vorrichtung (100) nach Anspruch 1, **dadurch gekennzeichnet, dass** der elastische Mechanismus (10) in der Art eines Systems mit vier Hälsen mit mindestens zwei Traversen (31, 32) ist, die sich zwischen dem ersten Element (1) und dem zweiten Element (2) senkrecht zum einen und zum anderen erstrecken, mit denen die Traversen jeweils durch zwei Hälse (311, 312; 321, 322) verbunden sind, wobei die beiden Traversen (31, 32) mit dem ersten Element (1) und dem zweiten Element (2) ein verformbares Parallelogramm bilden.

3. Vorrichtung (100) nach Anspruch 1 oder 2, **dadurch gekennzeichnet, dass** der mindestens eine Kraftmesswertaufnehmer (7) ein Messwertaufnehmer für den Energieverbrauch des Wirkgliedes (6) ist.

4. Vorrichtung (100) nach einem der Ansprüche 1 bis 3, **dadurch gekennzeichnet, dass** der mindestens eine Positionsmesswertaufnehmer (9) ein optischer Messwertaufnehmer mit einem Messlineal (92) ist, das an dem zweiten Element (2) oder an der Struktur (50) befestigt ist, und ein Lesekopf (91), der an der Struktur (50) oder beziehungsweise an dem zweiten Element (2) befestigt ist.

5. Verfahren zum Messen der Luft eines Uhrwerks, **dadurch gekennzeichnet, dass** zum Messen der Luft eines zusammengesetzten Drehteils (8) in einem Mechanismus in einer Messrichtung (D) eine Vorrichtung (100) nach einem der vorstehenden Ansprüche eingesetzt wird, dadurch, dass das zweite Element (2) in der Messrichtung (D) ausgerichtet wird, dadurch, dass das Drehteil (8) mit dem Greifer (4) ergriffen wird, dadurch, dass das Wirkglied (6) in einer ersten Laufrichtung bis zur Aufzeichnung der ersten plötzlichen Variation des Kraftgradienten auf dem Wirkglied (6) eingesetzt wird, dadurch, dass die erste Position aufgezeichnet wird, in der die erste Variation auftritt, dadurch, dass das Wirkglied (6) in einer zweiten Laufrichtung, entgegengesetzt zur ersten, bis zur Aufzeichnung einer zweiten plötzlichen Variation des Kraftgradienten auf dem Wirkglied (6) manövriert, dadurch, dass die zweite Position aufgezeichnet wird, in der die zweite Variation auftritt, und dadurch, dass der Wert der Luft des Drehteils durch den Abstand zwischen der ersten Position und der zweiten Position berechnet wird.

6. Verfahren nach Anspruch 5, **dadurch gekennzeichnet, dass** zum Ergreifen des Drehteils (8) der Greifer (4) in Form einer Zange gewählt wird, dadurch, dass der Greifer (4) um eine Reichweite des Drehteils (8) herum geöffnet wird, dadurch, dass der Greifer (4) wieder auf Einspannanlage an dem Drehteil (8) geschlossen wird.

## Claims

1. Device for measuring horological shakes (100) comprising a structure (50) carrying an articulated mechanism (3) comprising a gripper (4) arranged so as to clamp a horological mobile component (8) within a horological assembly or an assembled horological movement, in which said articulated mechanism (3) comprises a first element (1) fixed to said structure (50), and relative to which a second element (2) is capable of undertaking a substantially linear movement under the effect of at least one actuator (6) arranged so as to manoeuvre, in a contactless manner and in both directions, said second element (2) substantially parallel to a measurement direction (D), in which said articulated mechanism (3) comprises a compliant mechanism (10) with necks and/or flexible strips, having a substantially linear force/stroke characteristic, connecting said second element (2) to said first element (1), and in which said device (100) comprises at least one position sensor (9) arranged to determine the position of said second element (2) in said measurement direction (D), and at least one load sensor (7) arranged to determine the variation in the axial pushing or pulling load of said second element (2) carrying said gripper (4), and/or the variation in the gradient of said load, and to send, to a control system (200) comprised in said device (100), a signal for triggering the position measurement during each sudden change in gradient of the load in each direction of running, and to determine the value of the shake E of said mobile component (8) within the assembly in which it is mounted, by comparing the position values measured in the two positions in which a sudden change in gradient occurs during the outward stroke and the return stroke.

2. Device (100) according to claim 1, **characterised in that** said compliant mechanism (10) is of the four-necked system type with at least two crosspieces (31, 32), extending between said first element (1) and said second element (2) perpendicularly to one another, to which each of said crosspieces are connected via two necks (311, 312; 321, 322), said two crosspieces (31, 32) constituting, with said first element (1) and said second element (2), a deformable parallelogram.

3. Device (100) according to claim 1 or 2, **characterised in that** said at least one load sensor (7) is a power consumption sensor of said actuator (6).

4. Device (100) according to one of claims 1 to 3, **characterised in that** said at least one position sensor (9) is an optical sensor with a measuring ruler (92) fixed to said second element (2), or to said structure (50), and a reading head (91) fixed to said structure (50), or respectively to said second element (2).

5. Method for measuring horological shakes, **characterised in that** for the measurement of the shake of a mobile component (8) assembled in a mechanism in a measurement direction (D), a device (100) according to one of the preceding claims is implemented, **in that** said second element (2) is aligned in said measurement direction (D), **in that** said mobile component (8) is grasped using said gripper (4), **in that** said actuator (6) is implemented in a first direction of running until a first sudden variation in the gradient of the load on said actuator (6) is recorded, **in that** the first position in which said first variation occurs is recorded, **in that** said actuator (6) is manoeuvred in a second direction of running opposite the first, until a second sudden variation in the gradient of the load on said actuator (6) is recorded, **in that** the second position in which said second variation occurs is recorded, and **in that** the value of the shake of said mobile component is calculated using the distance between said first position and said second position.

6. Method according to claim 5, **characterised in that** in order to grasp said mobile component (8), said gripper (4) is selected in the form of a clamp, **in that** said gripper (4) is opened around a shoulder of said mobile component (8), and **in that** said gripper (4) is closed such that it clamps said mobile component (8).
